(19) Europäisches Patentamt

European Patent Office

Office européen des brevets

(11) **EP 2 714 613 B1**

(12) **FASCICULE DE BREVET EUROPEEN**

(45) Date de publication et mention de la délivrance du brevet:
**22.03.2017 Bulletin 2017/12**

(21) Numéro de dépôt: **12731066.2**

(22) Date de dépôt: **25.05.2012**

(51) Int Cl.:
**C04B 14/06** (2006.01)       **C04B 26/02** (2006.01)

(86) Numéro de dépôt international:
**PCT/FR2012/051179**

(87) Numéro de publication internationale:
**WO 2012/168617 (13.12.2012 Gazette 2012/50)**

(54) **MATÉRIAU SUPER-ISOLANT À PRESSION ATMOSPHÉRIQUE À BASE D'AÉROGEL**

AUF AEROGEL BASIERENDES MATERIAL MIT SUPERISOLIERENDER EIGENSCHAFT BEI ATMOSPHÄRENDRUCK

AEROGEL-BASED MATERIAL THAT IS SUPER-INSULATING AT ATMOSPHERIC PRESSURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.05.2011 FR 1154593**

(43) Date de publication de la demande:
**09.04.2014 Bulletin 2014/15**

(73) Titulaire: **Electricité de France
75008 Paris (FR)**

(72) Inventeurs:
• **YRIEIX, Bernard**
  **F-77250 Moret Sur Loing (FR)**
• **MOREL, Benoît**
  **F-77760 Buthiers (FR)**
• **FORAY, Geneviève**
  **F-38200 Seyssuel (FR)**

(74) Mandataire: **Cabinet Plasseraud
66 rue de la Chaussée d'Antin
75440 Paris Cedex 09 (FR)**

(56) Documents cités:
**WO-A2-2004/037533      DE-A1- 19 533 564
DE-A1- 19 702 239**

• **HUIJU LIU ET AL: "Mixing and Packing of Fine Particles of Different Sizes", INDUSTRIAL & ENGINEERING CHEMISTRY RESEARCH, vol. 50, no. 1, 5 janvier 2011 (2011-01-05), pages 198-206, XP055010373, ISSN: 0888-5885, DOI: 10.1021/ie1008844**

**Description**

La présente invention concerne un matériau solide à base d'aérogel hydrophobe et d'un liant organique, et l'utilisation d'un tel matériau, de préférence intégré dans un panneau, pour l'isolation thermique, en particulier l'isolation thermique de bâtiments.

Le secteur du bâtiment, qui consomme plus de 40 % de l'énergie finale et contribue pour près du quart aux émissions françaises de gaz à effet de serre, représente le principal gisement d'économie d'énergie exploitable immédiatement. Le nombre de logements construits avant le premier choc pétrolier, et en particulier avant la première réglementation visant l'isolation thermique de bâtiments neufs (1975), est encore considérable et l'isolation thermique de bâtiments existants constitue par conséquent un domaine clé où il est relativement facile de réaliser des économies d'énergie considérables.

Une des voies explorées est l'isolation thermique par l'intérieur, c'est-à-dire par recouvrement des surfaces (murs, plafonds, planchers, toiture) avec des matériaux à faible conductivité thermique. La principale résistance que rencontre cette approche est probablement, bien plus que le coût et les travaux qu'impliquerait une telle rénovation, la réduction de l'espace habitable qu'entraine l'apposition de panneaux épais sur les murs. L'épaisseur de ces panneaux, nécessaire pour obtenir un résultat d'isolation donné, est bien entendu d'autant moins importante que leur pouvoir isolant est fort.

La mise au point de matériaux thermoisolants à très faible conductivité thermique ($\lambda$) est donc un domaine de recherche dans lequel la Demanderesse est très active depuis de nombreuses années. Elle a ainsi proposé des panneaux isolants sous vide très performants ($\lambda$ = 5 à 10 mW/(m.K)) mais également très fragiles (HiPTI-High Performance Thermal Insulation, IEA/ECBS Annex 39 "Vacuum Insulation Panels - Study on VIP-components and Panels for Service Life Prediction of VIP in Building Applications (Subtack A)", Septembre 2005).

La présente invention est l'aboutissement d'une autre voie de recherche portant sur des matériaux super-isolants à pression atmosphérique (SIPA).

Un matériau super-isolant pour l'isolation thermique de bâtiments existants, idéalement,

- est à base de matériaux disponibles en grandes quantités,
- présente un coût de production relativement modéré par rapport aux économies d'énergie qu'il permet de réaliser,
- a une tenue mécanique qui permet son transport, sa manipulation et sa mise en place dans des conditions habituelles pour ce type de matériaux, et, bien entendu,
- présente une conductivité thermique la plus faible possible.

Les aérogels, et en particulier les aérogels de silice, sont des matériaux connus pour leur très faible conductivité thermique. La conductivité thermique intrinsèque d'un aérogel de silice (= conductivité d'un monolithe de cet aérogel) est, selon la porosité, de l'ordre de 10 à 15 mW/(m.K). La très grande fragilité mécanique et le coût exorbitant des monolithes d'aérogel interdisent cependant leur utilisation pour l'isolation thermique de bâtiments.

De très nombreuses demandes de brevet ont envisagé l'utilisation de particules d'aérogel, liées entre elles par des liants organiques (polymères) ou minéraux (liants hydrauliques), pour la fabrication de panneaux isolants.

La demande EP 0340707 divulgue des matériaux thermoisolants à base de billes d'aérogel hydrophobe ayant un diamètre compris entre 0,5 et 5 mm, une masse volumique de 0,05 à 0,35 g/cm$^3$ et une masse volumique en vrac, ou masse volumique apparente, comprise entre 0,04 et 0,25 g/cm$^3$. Ces billes sont mélangées avec de 5 à 50 %, rapportés au poids total du mélange, d'un liant organique, par exemple une résine mélamine-formaldehyde. Le liant utilisé remplit avantageusement le volume intergranulaire ou interparticulaire de l'aérogel. Les conductivités thermiques de ces matériaux sont comprises entre 28 et 43 mW/(m.K).

La demande EP 0787112 divulgue une composition liquide contenant des particules d'aérogel de faible taille (diamètre inférieur à 500 $\mu$m, de préférence inférieur à 250 $\mu$m) en suspension dans un liant aqueux de nature organique ou minérale. La très faible taille des particules d'aérogel est une caractéristique essentielle de l'invention décrite dans cette demande. Les matériaux thermoisolants séchés, obtenus à partir de ces compositions, ont des conductivités thermiques comprises entre 35 et 46 mW/(m.K).

La demande internationale WO 03/064025 divulgue des composites thermorésistants comportant au moins une couche à base de particules d'aérogel hydrophobe et d'un liant aqueux. Les particules d'aérogel ont un diamètre moyen inférieur à 5 mm, de préférence compris entre 0,1 et 3 mm. Leur forme est de préférence sphérique et leur distribution granulométrique relativement étroite. Ces particules sont incorporées dans une mousse de liant aqueux, la mousse étant créée grâce à la présence d'un agent moussant. Les matériaux thermoisolants préparés ont une conductivité thermique voisine de 32 mW/(m.K).

La demande DE 4441567 divulgue des matériaux isolants à base de particules d'aérogel et de liant minéral. Les particules d'aérogel ont un diamètre équivalent inférieur à 0,5 mm, de préférence inférieur à 0,2 mm. La teneur en particules d'aérogel des matériaux finaux est décrite comme étant comprise de préférence entre 20 et 90 % en volume.

Les matériaux exemplifiés ont des conductivités thermiques relativement élevées, comprise entre 150 et 250 mW/(m.K).

La demande EP 0 954 438 décrit des matériaux composites multicouches comportant au moins une couche à base de particules d'aérogel. Il s'agit en particulier de matériaux ayant une structure en sandwich avec une couche intermédiaire à base d'aérogel entre deux couches à base de fibres de poly(éthylène téréphtalate). Les particules d'aérogel de la couche intermédiaire sont décrites comme ayant un diamètre équivalent compris entre 250 $\mu$m et 10 mm, de préférence entre 250 $\mu$m et 2 mm. L'exemple décrit la fabrication d'un matériau tri-couche ayant une conductivité thermique de 45 mW/(m.K).

DE19533564A1 concerne un matériau composite contenant de 5 à 97% en volume, des particules d'aérogel, au moins un liant et au moins une matière fibreuse, dans lequel le diamètre de la particule d'aérogel est supérieur ou égal à 0,5 mm, un procédé pour sa production et son utilisation.

Enfin, le brevet US 5 656 195 divulgue des produits moulés thermoisolants à base d'aérogel de silice présentant de bonnes conductivités thermiques, de l'ordre de 17 à 23 mW/(m.K), mais au prix de l'utilisation de phyllosilicates destinés à ajuster la viscosité des liants retenus. Certains phyllosilicates, du fait de leur faible taille et de leur structure cristalline, pourraient présenter en effet des risques de santé pour le personnel présent au lieu de fabrication, mais potentiellement aussi pour les usagers des matériaux finis (voir Health related effects of phyllosilicates, de Jean Bignon, Springer Verlag, 1990). L'usage des phyllosilicates recommandé par ce document présente en outre de nombreux inconvénients qui trouvent leur origine dans la grande surface spécifique de ces matériaux et leur affinité pour l'eau :

- il aboutit à des proportions de liant importantes, de l'ordre de 13 à 32 % en masse, susceptibles d'augmenter la conductivité thermique du produit final,
- il mobilise de l'eau et ralentit le séchage,
- il a tendance à renforcer mécaniquement le liant, ce dont il faut se garder du fait de la grande fragilité des particules d'aérogel,
- il rend plus complexe le procédé de fabrication et en augmente le coût.

Cette brève revue, non exhaustive, montre que, malgré l'utilisation de quantités prétendument importantes (jusqu'à 95 % en volume) de particules d'aérogel à faible conductivité thermique intrinsèque (11 mW/(m.K) dans l'exemple 1 de EP 0 954 438) il semble impossible d'obtenir des matériaux ayant des conductivités thermiques significativement inférieures à 25 mW/(m.K), ou seulement au prix d'utilisation de composants minéraux potentiellement nocifs.

La Demanderesse, après de nombreuses années de recherche visant à proposer des matériaux thermoisolants à base de particules d'aérogel, a compris que la proportion volumique de l'aérogel jouait un rôle primordial dans le pouvoir isolant des matériaux finis. En focalisant tout son effort sur l'obtention de matériaux avec des fractions volumiques d'aérogel réellement importantes, elle a pu fabriquer des matériaux ayant des conductivités thermiques inférieures à 18 mW/(m.K), atteignant même parfois 14 - 15 mW/(m.K), et ceci en utilisant uniquement des composants minéraux amorphes (silice) et en évitant l'utilisation de composés minéraux cristallins tels que des phyllosilicates.

Au cours de ses recherches, la Demanderesse a compris en particulier qu'il était essentiel de réduire le plus possible le volume interparticulaire des matériaux sans toutefois le remplir avec le liant, car ce dernier a une conductivité thermique généralement très supérieure à celle de l'aérogel et augmenterait indésirablement la conductivité thermique globale du matériau.

Elle a en outre constaté que, contrairement à l'enseignement de US 5 656 195, la présence d'une certaine fraction de phyllosilicates n'était aucunement indispensable.

Dans la présente invention la réduction du volume de l'espace interparticulaire est obtenue,

- grâce à l'utilisation d'au moins deux populations de particules d'aérogel qui diffèrent par leur taille, les particules fines remplissant les vides laissés par les grosses,
- grâce à l'optimisation des proportions de mélange de ces populations de particules,
- grâce à la limitation de la quantité de liant, sans fragilisation excessive du matériau, rendue possible par le faible volume interparticulaire, et
- grâce à l'utilisation d'une quantité appropriée d'un agent tensioactif, ou agent amphiphile, qui, au cours de la préparation des matériaux, assure l'interaction entre les particules hydrophobes et la phase aqueuse du liant dans lequel elles sont mises en suspension ; l'utilisation d'un agent tensioactif conduit ainsi à une répartition spatiale régulière et optimisée des particules.

La présente invention a par conséquent pour objet un matériau solide d'isolation thermique, comprenant moins de 0,1% en poids (i.e. essentiellement exempt) de phyllosilicates, comprenant

(a) de 70 à 98 % en volume, de préférence de 75 à 96 % en volume, en particulier de 80 à 95 % en volume, de particules d'aérogel de silice hydrophobe ayant une masse volumique intrinsèque comprise entre 110 et 210 kg/m$^3$,

(b) de 0,3 à 12 % en volume, de préférence 0,5 à 9 % en volume, d'un liant organique formé par :

- au moins un polymère organique (b1) et au moins un agent tensioactif (b2), ou

- par au moins un polymère organique amphiphile obtenu à partir de monomères comportant un groupement ionique et une chaîne grasse (b3),

ces fractions volumiques étant déterminées par analyse d'image sur des coupes minces du matériau solide et étant rapportées au volume total du matériau,

les particules d'aérogel ayant une distribution granulométrique présentant au moins deux maxima, avec un premier maximum correspondant à un diamètre équivalent (d) inférieur à 200 μm, de préférence compris entre 25 μm et 150 μm, et un deuxième maximum correspondant à un diamètre équivalent (D) compris entre 400 μm et 10 mm, de préférence entre 500 μm et 5 mm.

Dans la présente demande, sauf indications contraires, les distributions granulométriques sont les distributions granulométriques en volume.

L'expression « essentiellement exempt de phyllosilicates » signifie que le matériau comprend moins de 0,1 % en poids, de préférence moins de 0,05 % en poids et en particulier moins de 0,01 % en poids de phyllosilicates. En effet, plus la fraction de ces composants minéraux cristallins est faible, plus les risques pour l'environnement et la santé qu'ils présentent sont réduits.

On entend dans la présente demande par diamètre équivalent d'une particule non sphérique le diamètre de la sphère de même volume que la particule. Le diamètre équivalent moyen est la valeur moyenne en volume des diamètres équivalents d'une population de particules. Pour des particules ayant une taille inférieure à 2 mm ce diamètre équivalent moyen peut être déterminé expérimentalement par granulométrie laser. Pour des tailles au-delà de 2 mm, il est possible d'estimer ce diamètre par tamisage avec des intervalles entre tamis étroits. On peut également mentionner comme méthode de mesure l'analyse d'image et plus particulièrement les méthodes des intercepts ou des ouvertures par pas successifs, fonctions granulométriques prévues sur la plupart des analyseurs du commerce.

La somme des constituants (a) et (b) représente de préférence au moins 90 % en poids, en particulier au moins 92 % en poids, encore plus préférentiellement au moins 95 % en poids du matériau.

Le matériau peut en effet contenir de faibles proportions d'autres ingrédients, tels que des particules opacifiantes ou des fibres, décrits plus en détails ci-après. Par ailleurs, l'espace interparticulaire est composé aussi, inévitablement, d'une certaine fraction d'air.

On peut utiliser en tant qu'aérogel en principe n'importe quel aérogel hydrophobe couramment utilisé dans la technique pour des applications d'isolation thermique, par exemple les aérogels porteurs de groupements organiques décrits dans les documents discutés ci-avant.

Le terme « aérogel » désigne dans la présente invention les gels d'oxydes métalliques obtenus de manière connue par voie sol-gel et qui ont été séchés. Ce terme englobe à la fois les aérogels proprement dit, obtenus par séchage supercritique des gels formés, mais également les gels appelés couramment « xérogels » obtenus par séchage évaporatif à pression atmosphérique. Les xérogels, du fait de leur faible coût, sont très intéressants dans la perspective d'une production en grande quantité des matériaux de la présente invention, alors que les aérogels présentent des propriétés techniques plus intéressantes mais ont un coût de production élevé.

Les groupements organiques conférant à l'aérogel son caractère hydrophobe sont de préférence des groupes de formule $-Si(R)_n$ où n = 1, 2 ou 3 et R représente un groupe organique non hydrolysable, linéaire, ramifié ou cyclique, aromatique ou cycloaliphatique, de préférence un groupe alkyle en $C_{1-18}$ ou aryle en $C_{6-14}$, les groupes cyclohexyle, phényle ou alkyle en $C_{1-6}$, en particulier méthyle ou éthyle, étant particulièrement préférés.

Il est connu que la conductivité thermique d'un aérogel diminue avec sa masse volumique du moins jusqu'à un optimum établi entre 90 et 160 kg.m$^{-3}$. On utilisera donc de préférence dans la présente invention un aérogel ayant une masse volumique inférieure à 0,3 g/cm$^3$ et de préférence comprise entre 0,1 et 0,25 g/cm$^3$, en particulier comprise entre 0,11 et 0,21 g/cm$^3$, ces valeurs correspondant à la masse volumique intrinsèque de l'aérogel, c'est-à-dire à la masse volumique d'un monolithe de cet aérogel.

La masse volumique intrinsèque ($\rho_i$) de l'aérogel est bien entendu supérieure à la masse volumique en vrac, ou masse volumique apparente ($\rho_{app}$), d'une poudre du même aérogel qui est réduite du fait des interstices interparticulaires.

En effet pour un monolithe d'aérogel, équivalent à une particule unique d'aérogel de grande taille, la masse volumique intrinsèque ($\rho_i$) se calcule de la façon suivante :

$$\rho_i = m_{particule} / V_{particule}$$

où $m_{particule}$ est la masse d'une particule d'aérogel et $V_{particule}$ est le volume occupé par cette même particule.

Expérimentalement, cette masse volumique intrinsèque peut être déterminée, de manière connue, par tomographie à rayons X couplée à une mesure de masse volumique apparente ou bien par picnométrie Hg à faible pression.

Pour une poudre, formée de plusieurs particules d'aérogel, la masse volumique apparente ($\rho_{app}$) est égale à

$$\rho_{app} = m_{particules} / (V_{particule} + V_{inter}) = m_{particules} / V_{total}$$

La masse volumique apparente d'une poudre tend vers celle du monolithe lorsque le volume interparticulaire ($V_{inter}$) tend vers zéro.

Comme expliqué en introduction, la présente invention est basée sur la découverte qu'en réduisant le plus possible le volume interparticulaire ($V_{inter}$) de la poudre d'aérogel utilisée, autrement dit en maximisant sa compacité ($C_{poudre}$), on parvient à préparer des matériaux thermoisolants à faible teneur en liant et à faible volume interparticulaire, présentant des conductivités thermiques jusqu'ici inconnues pour des matériaux à base de particules d'aérogel et de liant organique.

La Demanderesse a mis au point une manière relativement simple d'optimisation de la compacité ($C_{poudre}$) de la poudre d'aérogel utilisée. On entend par compacité ici le volume occupé par les particules, rapporté au volume total de la poudre, le volume total de la poudre étant la somme du volume des particules ($V_{particule}$) et du volume interparticulaire ($V_{inter}$).

$$C_{poudre} = V_{particule}/V_{total}$$

avec

$$V_{total} = V_{particule} + V_{inter}$$

Lorsqu'on utilise deux populations différentes de particules (distribution granulométrique bimodale), la première ayant un diamètre équivalent moyen ($D_m$) et la deuxième un diamètre équivalent moyen ($d_m$), on prépare différents mélanges contenant des proportions variables de ces deux poudres et l'on mesure la masse volumique apparente, ou masse volumique en vrac, de chacun des mélanges.

On trace ensuite un diagramme montrant la masse volumique mesurée des mélanges en fonction des proportions respectives de chacune des poudres. La Figure 1a montre ainsi la masse volumique d'un mélange de deux aérogels de granulométrie différentes, en fonction de la fraction massique d'un des deux aérogel, la partie complémentaire à 100 % étant formée par l'autre.

La Figure 1(b) a été obtenue en calculant la compacité des poudres selon la formule suivante

$$C_{poudre} = \frac{\rho_{app}}{\sum_{j=1}^{n} \left( v_j \cdot (\rho_i)_j \right)}$$

$$\sum_{j=1}^{n} v_j = 1$$

où $v_j$ désigne la fraction volumique de l'aérogel j de masse volumique intrinsèque $(\rho_i)_j$.

Sur la Figure 1(b) on peut aisément relever les proportions de mélange aboutissant à la plus grande compacité en vrac du mélange. Pour l'exemple de la Figure 1(b) obtenue avec une première poudre d'aérogel A ayant un diamètre équivalent moyen $d_m$ de 33,5 μm et une deuxième poudre d'aérogel B ayant un diamètre équivalent $D_m$ de 1210 μm (voir Exemple 1), il s'agit des mélanges contenant d'environ 40 à 70 % en poids, de préférence de 40 à 60 % en poids, de poudre B.

Ces proportions respectives optimales dépendent bien entendu d'un certain nombre de paramètres tels que le rapport $D_m/d_m$, la largeur des distributions de chacune des poudres, la forme des particules constituant les poudres, etc. et sont idéalement déterminées pour chaque association de poudre d'aérogel.

Bien entendu, cette méthode peut s'appliquer également à un mélange de trois ou plus de trois populations de particules.

La compacité du mélange d'aérogel en vrac avant élaboration et celle obtenue au sein du matériau final ne sont pas obligatoirement identiques. En effet, le mélange avec les autres constituants et le procédé employé peuvent modifier l'arrangement et la répartition granulométrique des particules. Ainsi un réajustement des proportions des différentes poudres d'aérogel peut s'avérer nécessaire en fonction du procédé d'élaboration du matériau final afin d'obtenir la compacité visée.

L'aérogel à distribution bimodale ou multimodale utilisé pour la fabrication des matériaux de la présente invention a de préférence une masse volumique en vrac, avant mélange avec les autres ingrédients, comprise entre 0,080 et 0,180 g/cm$^3$, de préférence entre 0,095 et 0,150 g/cm$^3$. Sa compacité telle que définie ci-dessus est de préférence supérieure à 0,75, en particulier supérieure à 0,77 et idéalement supérieure à 0,78.

Le rapport du diamètre équivalent (D), correspondant au maximum granulométrique situé entre 400 $\mu$m et 10 mm, au diamètre équivalent (d), correspondant au maximum granulométrique situé en dessous de 200 $\mu$m est de préférence compris entre 10 et 200, en particulier entre 20 et 100.

Dans la présente invention, les particules d'aérogel de faible taille remplissent les espaces interparticulaires laissés libres par les particules de plus grande taille (voir Figure 5).

Dans un mode de réalisation préféré, la fraction volumique de particules d'aérogel ayant un diamètre équivalent inférieur à 200 $\mu$m est comprise entre 7,5 et 60 %, de préférence entre 20 et 55 %, ces pourcentages étant rapportés à l'ensemble des particules aérogel.

Dans un autre mode de réalisation préféré, la fraction volumique de particules d'aérogel ayant un diamètre équivalent inférieur à 150 $\mu$m, est comprise entre 7,5 et 60 %, de préférence entre 20 et 55 %, ces pourcentages étant rapportés à l'ensemble des particules aérogel.

Dans encore un autre mode de réalisation préféré, la fraction volumique de particules d'aérogel ayant un diamètre équivalent inférieur à 80 $\mu$m, est comprise entre 7,5 et 60 %, de préférence entre 20 et 55 %, ces pourcentages étant rapportés à l'ensemble des particules aérogel.

Dans les matériaux isolants de la présente invention, les particules d'aérogel sont associées à un liant organique polymérique (composant b) qui confère au matériau sa cohésion et résistance mécanique.

Ce liant peut être un mélange d'un polymère organique (composant b1) et d'un agent tensioactif (composant b2). En effet, dans un souci d'éviter l'utilisation de composés volatils organiques, le mélange des particules aérogel avec le liant organique se fait de préférence en milieu aqueux. En l'absence d'un agent amphiphile, il serait alors impossible de disperser l'aérogel hydrophobe de façon homogène dans la phase liquide.

Sur les 0,3 à 12 % en volume de liant organique (b), environ 0,2 à 8 %, de préférence 0,4 à 6 % et en particulier de 0,5 à 2 %, rapporté au volume total du matériau, sont formés par le polymère organique (b1) et environ 0,1 à 4 % en volume, de préférence de 0,1 à 3 % en volume et en particulier de 0,15 à 1 % en volume, rapporté au volume total du matériau, sont formés par l'agent tensioactif (b2).

Le polymère (b) est de préférence préalablement dissous ou dispersé dans de l'eau et les particules d'aérogel sont ensuite incorporées dans cette solution ou dispersion. Etant donné que l'utilisation de solvants ou co-solvants organiques est indésirable, on choisira de préférence des polymères organiques thermoplastiques hydrosolubles ou hydrodispersibles. On entend par polymère hydrodispersible selon la présente invention des polymères qui, lorsqu'ils sont dispersés dans l'eau se mettent sous forme de particules ayant une taille moyenne comprise entre 10 et 300 nm et de préférence entre 10 et 100 nm.

La concentration du polymère hydrosoluble ou hydrodispersible dans la phase aqueuse est de préférence assez faible, cette faible concentration permettant de limiter la quantité de liant incorporée dans le matériau et facilitant la répartition régulière du liant polymérique sur les particules d'aérogel. De préférence la phase aqueuse (englobant également l'agent tensioactif, mais non pas les particules d'aérogel) contient au plus 20 % en poids de liant organique polymérique, en particulier entre 1 et 10 % en poids de liant organique, et encore plus préférentiellement entre 1,5 et 8 % en poids de liant organique.

Dans un mode de réalisation particulièrement intéressant, le polymère organique est un polymère hydrosoluble thixotrope, capable de former un gel physique par l'établissement d'une multitude de liaisons faibles (par exemple liaisons hydrogène), mais dont la viscosité diminue rapidement lorsqu'il est soumis à des forces de cisaillement. Un tel polymère est particulièrement intéressant car il confère au mélange aérogel/phase aqueuse une consistance de pâte ce qui facilite certaines méthodes de mise en forme du matériau avant séchage. La viscosité très élevée au repos des gels de polymères thixotropes prévient par ailleurs une éventuelle sédimentation/ségrégation d'une partie des particules d'aérogel garantissant ainsi une répartition régulière des particules d'aérogel dans l'ensemble du matériau.

Comme expliqué ci-dessus, l'agent tensioactif est indispensable pour permettre le mouillage de la surface hydrophobe des particules d'aérogel par la phase aqueuse et assurer une dispersion la plus régulière possible. L'agent tensioactif peut être introduit dans la phase aqueuse avant ou après le polymère organique, ou bien il peut être appliqué sur les particules d'aérogel avant incorporation de celles-ci dans la solution ou suspension aqueuse de liant. Sa concentration dans la phase aqueuse est généralement comprise entre 0,3 et 3 % en poids.

Le polymère organique peut également être une résine thermodurcissable qui polymérise et/ou réticule après mise en forme du mélange aérogel/phase liquide. Il peut s'agir, par exemple de résines polyester, polyuréthane, vinylester, aminoplastes, phénoliques et époxy.

On peut citer à titre d'exemples de polymères thermoplastiques les celluloses et amidons modifiés hydrosolubles ou hydrodispersibles, tels que des éthers de cellulose ou d'amidon, des polymères acryliques, les silicones, les poly(acétate de vinyle), les copolymères éthylène/acétate de vinyle, les copolymères styrène/acrylate, les copolymères vinyle/acrylate, les copolymères styrène/butadiène, le poly(alcool vinylique), le polyacrylamide, le poly(chlorure de vinyle).

La Demanderesse a utilisé avec succès :

- des éthers de cellulose commercialisés par la société Bostik sous la dénomination Quelyd Vinyl+® et par SE Tylose® sous la référence TYLOSE HA40YP2,
- des latex styrène butadiène et styrène butyl acrylate proposés respectivement par la société Sika sous la dénomination Sikalatex® et la société BASF sous la dénomination Model dispersion.
- une résine époxy bicomposante commercialisée par la société BASF sous la référence MASTERTOP 1720 A7 et B7.

Parmi les agents tensioactifs, on choisira de préférence des agents tensioactifs non ioniques présentant un faible pouvoir moussant. On peut citer à titre d'exemples les agents tensioactifs de la série des Triton® X commercialisés par la société Dow, en particulier le Triton X-100 (nonylphényl polyéthoxylé), le Flip-Flop® (copolymère de styrène et d'esters méthacryliques en solution aqueuse) commercialisés par la société PCAS ou le Tylovis® EP28 commercialisé par SE TYLOSE (copolymère d'oxyde de propylène et d'oxyde d'éthylène).

Il est possible de remplacer partiellement ou totalement le polymère organique et l'agent tensioactif par un composant présentant les propriétés et fonctionnalités de ces deux composants. Ainsi, on peut utiliser à la place ou en plus des composants (b1) et (b2) un ou plusieurs polymères amphiphiles (composant b3).

Il s'agit de polymères organiques connus qui comportent à la fois des séquences ou groupements hydrophiles et des séquences ou groupement hydrophobes, par exemple de polymères synthétisés à partir de monomères intrinsèquement amphiphiles, comportant par exemple un groupement ionique et une chaîne grasse.

Le matériau isolant de la présente invention peut contenir en outre au plus 2% en volume, de préférence de 0,2 à 1% en volume, de particules opacifiantes au rayonnement infrarouge. De telles particules sont connues et sont choisies par exemple parmi les particules de noir de carbone, de graphite, de dioxyde de titane, d'oxyde de fer ou de dioxyde de zirconium, de carbure de silicium, de silicates et aluminates complexes. Ces particules peuvent être présentes à côté des particules d'aérogel, c'est-à-dire dans l'espace interparticulaire, ou bien elles peuvent être incorporées au coeur des particules d'aérogel au cours de la synthèse par voie sol-gel de celles-ci.

Le matériau selon l'invention peut en outre contenir une certaine fraction de fibres de renforcement. Il peut s'agir de fibres minérales, par exemple de fibres de verre, de carbone, d'alumine, de céramique, de roche, ou bien de fibres organiques par exemple des fibres de cellulose, de coton, de laine, de polyamide, de polyester, de polyéthylène, de polypropylène, de matériaux composites recyclés. Etant donné que toutes ces fibres ont une conductivité thermique supérieure à celle de l'aérogel, on cherchera à limiter leur proportion à la quantité minimale conduisant à la résistance mécanique souhaitée. De façon générale, le matériau selon l'invention contient au plus 5 % en volume, de préférence de 0,1 à 4 % en volume, en particulier de 0,5 à 3 % en volume de fibres organiques et/ou minérales.

L'originalité du matériau de la présente invention ne réside toutefois pas tant dans la nature chimique des ingrédients (liant polymère, agent tensioactif, particules opacifiantes, fibres de renforcement) que dans la granulométrie particulière de l'aérogel utilisé. En effet, comme déjà expliqué ci-dessus, la Demanderesse a découvert qu'il était possible de préparer des matériaux thermoisolants à très faible conductivité thermique en utilisant, en combinaison, à la fois un aérogel constitué de particules de taille grossière et un aérogel constitué de particules beaucoup plus fines, destinées à remplir le volume interparticulaire des grosses particules.

Pour que les particules fines d'aérogel puissent combler efficacement le volume interparticulaire entre les grosses particules, leur diamètre équivalent est de préférence significativement plus faible que celui des grosses particules. Cette différence de taille entre les petites et grandes particules d'aérogel pourrait être quantifiée grâce au rapport du diamètre équivalent moyen de particules grossières de l'échantillon au diamètre équivalent moyen de particules fines de ce même échantillon.

Dans le matériau fini, la notion de diamètre équivalent moyen n'est toutefois pas très pertinente car il est impossible de reconstituer, à partir de la granulométrie du mélange, les deux ou plusieurs populations de particules utilisées. La Demanderesse a par conséquent décidé de caractériser la différence de taille entre les différentes populations de particules utilisées, dans le matériau fini, grâce au rapport du diamètre équivalent (D) correspondant au maximum le plus intense dans la gamme 0,4 à 10 mm au diamètre équivalent (d) correspondant au maximum le plus intense dans la gamme inférieure à 200 μm. Ce rapport D/d est de préférence compris entre 10 et 200, en particulier entre 20 et 100, et de manière particulièrement avantageuse entre 25 et 80. Les valeurs (d et D) des diamètres correspondants à ces maxima sont déterminées par analyse d'image sur des coupes.

Ces gammes préférées restent valables même lorsque la distribution granulométrique comporte plus de deux maxima, c'est-à-dire lorsque l'aérogel a été préparé par mélange de trois, quatre ou plus de populations de particules de tailles de particules différentes.

Le matériau de la présente invention contient inévitablement une certaine fraction volumique d'air sous forme de macropores (diamètre supérieur à 200 nm).

Pour limiter le plus possible la conduction thermique par conduction gazeuse, on cherchera à éliminer ou, au moins, à limiter fortement la fraction volumique occupée par des macropores. Ceci peut être fait en prenant soin de ne pas utiliser d'agent tensioactif moussant, en évitant des modes d'agitation et d'élaboration favorisant le moussage, l'entraînement d'air ou l'injection d'air, ou bien encore en employant un agent anti-mousse.

Le liant du matériau selon l'invention ne forme pas une matrice continue. Il ne remplit pas la totalité de l'espace entre les particules d'aérogel. Une telle configuration conduirait à un matériau présentant une conductivité thermique trop élevée. Le liant du matériau selon l'invention forme au contraire des films très minces et/ou des ponts ou fibrilles ponctuels entre au moins une partie des particules.

Selon un mode particulièrement préféré de l'invention, le matériau comprend un liant ayant une température de transition vitreuse inférieure à 30°C et se présente sous la forme de film sur les particules d'aérogel d'épaisseur moyenne inférieure à 0,4 microns et/ou de fibrilles entre les particules d'aérogel d'épaisseur moyenne inférieure à 1 micron.

La présente invention a également pour objet un procédé de préparation d'un matériau isolant thermique tel que décrit ci-dessus. Un tel procédé comprend au moins trois étapes, à savoir

-   le mélange ou la mise en contact des particules d'aérogel de silice hydrophobe (a), de l'agent tensioactif (b2) et du polymère organique (b1), ou du polymère amphiphile (b3), avec 0,75 à 4 parties en poids d'eau, de préférence avec 1,5 à 3 parties en poids d'eau, pour une partie de composants solides (a, b1, b2, b3).
-   la mise en forme de la composition aqueuse ainsi obtenue, et
-   le séchage du matériau mis en forme.

Le composant (a), à savoir l'aérogel de silice hydrophobe, est avantageusement obtenu par mélange d'au moins deux fractions d'aérogel, une première fraction présentant un diamètre équivalent moyen ($d_m$) inférieur à 200 $\mu$m, de préférence compris entre 25 $\mu$m et 150 $\mu$m, et une deuxième fraction présentant un diamètre équivalent moyen ($D_m$) compris entre 400 $\mu$m et 10 mm, de préférence entre 500 $\mu$m et 5 mm. Ces différentes fractions peuvent être obtenues de manière connue par exemple par broyage d'un aérogel hydrophobe de silice puis tamisage préparatif.

Il est bien entendu possible de mélanger deux fractions d'aérogel obtenues à partir de deux échantillons d'aérogel différents ayant différentes masses volumiques intrinsèques.

Comme expliqué ci-avant, l'aérogel de silice hydrophobe (a), avant d'être mélangé ou mis en contact avec les autres ingrédients, a la compacité la plus élevée possible. Elle est de préférence supérieure à 0,75, en particulier supérieure à 0,77, de manière encore plus particulièrement supérieure à 0,78 et idéalement supérieure à 0,80. Cela ne signifie pas que les deux fractions d'aérogel de différents diamètres équivalents moyens doivent être mélangées l'une avec l'autre avant d'être mises en contact avec l'eau ou avec les autres composants du matériau. La présente invention englobe en effet également la variante où les différentes fractions d'aérogel sont mélangées séparément et successivement avec les autres ingrédients.

Le mode de mélange des différents composants n'est en principe pas déterminant pour la présente invention et l'homme du métier est en mesure d'imaginer ou de tester différents protocoles permettant d'obtenir un mélange homogène, contenant l'eau et l'ensemble des composants solides. Ce mélange peut avoir une consistance liquide, plus ou moins visqueuse, permettant par exemple le moulage par coulée, ou bien il peut avoir la consistance d'une pâte.

Dans un mode de réalisation préféré du procédé de l'invention, le polymère organique (b1) et l'agent tensioactif (b2) ou le polymère organique amphiphile (b3) sont d'abord dissous ou dispersés dans l'eau et la solution ou dispersion ainsi préparée est ensuite mélangée ou mise en contact avec les particules d'aérogel, éventuellement mélangées aux fibres de renforcement et/ou aux particules opacifiantes.

Lorsqu'on utilise en combinaison un polymère organique (b1) et un agent tensioactif (b2), le rapport en poids (b1) / (b2) est de préférence compris entre 30/70 et 80/20, en particulier entre 40/60 et 70/30.

La mise en forme de la composition aqueuse ainsi obtenue peut être faite par exemple par coulée, extrusion, essorage, ou moulage sous pression. Le séchage du matériau humide mis en forme se fait par évaporation de la phase aqueuse, avec ou sans chauffage. Il s'est avéré avantageux d'appliquer une pression mécanique modérée de l'ordre de 0,5 à 20 kPa, sur le matériau en cours de séchage de manière à expulser d'éventuelles bulles d'air formées ou de réduire la quantité d'air laissée dans l'espace interparticulaire suite à l'évaporation de l'eau.

Le matériau de la présente invention, préparé à partir de particules d'aérogel ayant une masse volumique intrinsèque comprise entre 110 et 210 kg/m$^3$, a de préférence une masse volumique, déterminée à l'état sec, comprise entre 100 et 215 g/cm$^3$.

Sa conductivité thermique à 23 °C (déterminée par fluxmétrie conformément aux normes ISO 8301, EN12667:2001 et EN1946-3:1999 sur un appareil HESTO-Lambda-Control K202 sur un échantillon mis sous une pression de 7 kPa) est inférieure à 20 mW/(m.K), de préférence inférieure à 18 mW/(m.K), en particulier comprise entre 14 et 17 mW/(m.K). Cette valeur augmente avec la quantité de phase organique (b) et, également, avec la quantité d'air incluse sous forme de macropores.

Enfin, la présente invention a également pour objet un produit d'isolation thermique comportant au moins une couche du matériau de la présente invention.

Ce produit est de préférence une plaque ayant une épaisseur comprise entre 5 et 75 mm, en particulier entre 20 mm et 50 mm. Il peut comporter un certain nombre d'autres couches formées par exemple par des feuilles métalliques ou plastiques, des feuilles de papier, des matelas de fibres naturelles ou synthétiques, des plaques, des grilles etc..

Dans un tel produit, le matériau isolant thermique à base d'aérogel représente de préférence au moins 50 % en volume, en particulier au moins 70 % en volume et de façon particulièrement avantageuse au moins 80 % en volume, voire au moins 95 % en volume.

**Exemple 1**

Deux aérogels de silice hydrophobe, commercialisés sous la dénomination ISOGEL® par la société PCAS/ENERSENS, de granulométries établies par tamisage comprises entre 0 et 100 μm (Aérogel A, $\rho_i$ = 150 kg/m$^3$, $d_m$ = 33,5 μm déterminé par granulométrie laser en voie sèche) pour le premier et comprises entre 1000 et 1250 μm (Aérogel B, $\rho_i$ = 182 kg/m$^3$, $D_m$ 1210 μm déterminé par granulométrie laser en voie sèche) pour le second sont mélangés.

Ces aérogels sont mélangées en différentes proportions volumiques et on détermine la masse volumique apparente de ces mélanges. La Figure 1a montre ainsi la masse volumique des mélanges en fonction de la fraction massique de l'Aérogel B, la partie complémentaire à 100 % étant formée par l'Aérogel A.

Un mélange de poudres d'aérogel contenant

- 40 % en masse de particules ayant une taille inférieure à 100 μm (Aérogel A), et
- 60 % en masse de particules ayant une taille comprise entre 1000 et 1250 μm (Aérogel B).

a une masse volumique apparente ($\rho_{app}$) de 0,133 g/cm$^3$, une compacité de 0,79 (voir Figure 1b) et une conductivité thermique de 16 mW/(m.K) à 23 °C.

Un volume de ce mélange est ensuite mélangé avec 0,285 volume d'une préparation de colle Bostik contenant 2,2% en masse de colle cellulosique commercialisée sous la marque QUELID Vinyl+®, 4,2% en masse d'une dispersion aqueuse à 30% de tensioactif non-ionique commercialisé sous la référence Flip-Flop® par la société PCAS.

La composition homogène obtenue a la consistance d'une pâte qu'on étale en une épaisseur de 1 cm dans un moule perforé au fond duquel a été placée une feuille de papier imprégnée de la colle à papier peint additionnée d'agent tensioactif (voir Figure 2). Une seconde feuille imprégnée est utilisée pour recouvrir la pâte. On laisse sécher cette structure en sandwich pendant 6 jours à une température de 25 °C et à une humidité relative de 50 %. On obtient ainsi un produit en forme de plaque autoporteuse facile à manipuler et à découper, présenté aux Figures 3 et 4. La Figure 5 montre la microstructure, obtenue par tomographie X, du produit ainsi obtenu avec un agrandissement d'environ 80.

La conductivité de la couche contenant l'aérogel est de seulement 17,0 mW/(m.K) à 23 °C, c'est-à-dire à peine supérieure à celle du mélange de poudre utilisé pour sa préparation. Cette valeur est spectaculairement basse en comparaison des conductivités thermiques rapportées dans l'état de la technique pour des produits isolants à base de particules d'aérogel lianté sans phyllosilicates, comprises entre 25 et 350 mW/(m.K).

**Exemple 2**

Deux aérogels de silice hydrophobe, commercialisés sous la dénomination ISOGEL® par la société PCAS/ENERSENS, de granulométries établies par tamisage comprises entre 0 et 100 μm pour le premier et comprises entre 1000 et 1250 μm pour le second sont mélangés.

Un mélange de poudres d'aérogel contenant

- 40 % en masse de particules ayant une taille inférieure à 100 μm, et
- 60 % en masse de particules ayant une taille comprise entre 1000 et 1250 μm a une masse volumique apparente ($\rho_{app}$) de 0,136 g/cm$^3$, une compacité de 0,80 et une conductivité thermique de 15,8 mW/(m.K) à 23 °C.

Un volume de ce mélange est ensuite mélangé avec 0,22 volume d'une préparation aqueuse contenant 15% en masse d'une dispersion de latex Styrène butadiène diluée à 47% dans l'eau et commercialisée sous la marque Sikalatex®, et contenant 6,2% en masse d'une dispersion aqueuse à 30% de tensioactif non-ionique commercialisée sous la référence FlipFlop® par la société PCAS. La composition homogène obtenue a la consistance d'une pâte qu'on étale en une épaisseur de 1 cm dans un moule perforé au fond duquel a été placée une feuille de papier imprégnée de la préparation aqueuse. Une seconde feuille imprégnée est utilisée pour recouvrir la pâte. On laisse sécher pendant 20h sous une pression de 0,9 kPa à une température de 40 °C et à une humidité relative de 10 %. Les feuilles de papiers sont retirées et on obtient ainsi un produit en forme de plaque autoporteuse facile à manipuler et à découper.

Sa conductivité est de seulement 16 mW/(m.K) à 23 °C. Cette valeur est spectaculairement basse en comparaison des conductivités thermiques rapportées dans l'état de la technique pour des produits isolants à base de particules d'aérogel lianté sans phyllosilicates, comprises entre 25 et 350 mW/(m.K).

**Exemple 3**

De l'aérogel de silice hydrophobe opacifié, commercialisé sous la dénomination ISOGEL® par la société PCAS/ENERSENS, est broyé puis soumis à un fractionnement par tamisage.

La fraction de particules passant à travers un tamis de 100 $\mu$m et la fraction obtenue entre 1000 $\mu$m et 1250 $\mu$m sont utilisées.

Un mélange de poudres d'aérogel opacifié contenant

- 35 % en masse de particules ayant une taille inférieure à 100 $\mu$m, et
- 65 % en masse de particules ayant une taille comprise entre 1000 et 1250 $\mu$m a une masse volumique apparente ($\rho_{app}$) de 0,095 g/cm$^3$, une compacité de 0,76 et une conductivité thermique de 14,9 mW/(m.K) à 23 °C.

Un volume de ce mélange est ensuite mélangé avec 0,20 volume d'une préparation aqueuse contenant 12,7% en masse d'une dispersion de latex styrène butadiène diluée à 47% dans l'eau et commercialisée sous la marque Sikalatex®, contenant 4,3% en masse d'une dispersion aqueuse à 30% de tensioactif non-ionique commercialisée sous la référence FlipFlop® par la société PCAS.

La composition homogène obtenue a la consistance d'une pâte qu'on étale en une épaisseur de 1 cm dans un moule au fond duquel a été placée une feuille de papier imprégnée de la préparation aqueuse. Une seconde feuille imprégnée est utilisée pour recouvrir la pâte. On laisse sécher cette structure en sandwich sous une pression de 0,9 kPa pendant 18h à une température de 40 °C et à une humidité relative de 10 %. Les feuilles de papiers sont retirées et on obtient ainsi un produit en forme de plaque autoporteuse facile à manipuler et à découper.

Sa conductivité est de seulement 14,9 mW/(m.K) à 23 °C. Cette valeur est spectaculairement basse en comparaison des conductivités thermiques rapportées dans l'état de la technique pour des produits isolants à base de particules d'aérogel liantées sans phyllosilicates, comprises entre 25 et 350 mW/(m.K).

**Exemple 4**

Deux aérogels de silice hydrophobe, commercialisés sous la dénomination ISOGEL® par la société PCAS/ENERSENS, de granulométries établies par tamisage comprises entre 0 et 100 $\mu$m pour le premier et comprises entre 1000 et 1250 $\mu$m pour le second sont mélangés.

Un mélange de poudres d'aérogel contenant

- 40 % en masse de particules ayant une taille inférieure à 100 $\mu$m, et
- 60 % en masse de particules ayant une taille comprise entre 1000 et 1250 $\mu$m a une masse volumique apparente ($\rho_{app}$) de 0,136 g/cm$^3$, une compacité de 0,80 et une conductivité thermique de 15,8 mW/(m.K) à 23 °C.

Un volume de ce mélange est ensuite mélangé avec 0,225 volume d'une préparation aqueuse contenant 2,1% en masse d'un éther de cellulose commercialisé par TYLOSE® sous la référence TYLOSE HA40YP2, 1,3% en masse de tensioactif non-ionique commercialisé par TYLOSE® sous la référence TYLOVIS EP28. La composition homogène obtenue a la consistance d'une pâte qu'on étale en une épaisseur de 1 cm dans un moule perforé au fond duquel a été placée une feuille de papier imprégnée de la préparation aqueuse. Une seconde feuille imprégnée est utilisée pour recouvrir la pâte. On laisse sécher cette structure en sandwich pendant 18 heures à une température de 40°C et à une humidité relative de 10 %. On obtient ainsi un produit en forme de plaque autoporteuse facile à manipuler et à découper.

La conductivité de la couche contenant l'aérogel est de seulement 15,7 mW/(m.K) à 23 °C. Cette valeur est spectaculairement basse en comparaison des conductivités thermiques rapportées dans l'état de la technique pour des produits isolants à base de particules d'aérogel liantées sans phyllosilicates, comprises entre 25 et 350 mW/(m.K).

**Exemple 5**

Deux aérogels de silice hydrophobe, commercialisés sous la dénomination ISOGEL® par la société PCAS/ENERSENS, de granulométries établies par tamisage comprises entre 0 et 100 $\mu$m pour le premier et comprises entre 1000 et 1250 $\mu$m pour le second sont mélangés.

Un mélange de poudres d'aérogel contenant

- 40 % en masse de particules ayant une taille inférieure à 100 $\mu$m, et
- 60 % en masse de particules ayant une taille comprise entre 1000 et 1250 $\mu$m a une masse volumique apparente ($\rho_{app}$) de 0,136 g/cm$^3$, une compacité de 0,80 et une conductivité thermique de 15,8 mW/(m.K) à 23 °C.

Un volume de ce mélange est ensuite mélangé avec 0,24 volume d'une préparation aqueuse à base d'une résine époxydique bi-composante commercialisée par BASF sous la référence MASTERTOP 1720. Cette préparation contient 4,9% en masse du composant époxydique MASTERTOP 1720 A7, 5,22% du composant MASTERTOP 1720 B7 et 3,95% en masse d'une dispersion aqueuse à 30% de tensioactif non-ionique commercialisée sous la référence FlipFlop® par la société PCAS. Les composants époxydiques sont intimement mélangés en une première étape avant que l'eau et le tensioactif ne soient ajoutés.

La composition homogène obtenue a la consistance d'une pâte qu'on étale en une épaisseur de 1 cm dans un moule perforé au fond duquel a été placée une feuille de papier imprégnée de la préparation aqueuse. Une seconde feuille imprégnée est utilisée pour recouvrir la pâte. On laisse sécher cette structure en sandwich pendant 18 heures à une température de 40°C et à une humidité relative de 10 %. On obtient ainsi un produit en forme de plaque autoporteuse facile à manipuler et à découper.

La conductivité de la couche contenant l'aérogel est de seulement 16,8 mW/(m.K) à 23 °C. Cette valeur est spectaculairement basse en comparaison des conductivités thermiques rapportées dans l'état de la technique pour des produits isolants à base de particules d'aérogel liantées sans phyllosilicates, comprises entre 25 et 350 mW/(m.K).

**Exemple 6**

Deux aérogels de silice hydrophobe, commercialisés sous la dénomination ISOGEL® par la société PCAS/ENERSENS, de granulométries établies par tamisage comprises entre 0 et 100 $\mu$m pour le premier et comprises entre 1000 et 1250 $\mu$m pour le second sont mélangés.

Un mélange de poudres d'aérogel contenant

- 30 % en masse de particules ayant une taille inférieure à 100 $\mu$m, et
- 70 % en masse de particules ayant une taille comprise entre 1000 et 1250 $\mu$m a une masse volumique apparente ($\rho_{app}$) de 0,129 g/cm$^3$, une compacité de 0,78 et une conductivité thermique de 16 mW/(m.K) à 23 °C.

Pour un volume de ce mélange, on effectue un mélange en deux étapes avec les autres composants. La première étape est un mélange avec 0,164 volume d'une solution aqueuse contenant 1,2% en masse de tensioactif non ionique Triton X100 commercialisé par DOW®. En seconde étape, cet ensemble est mélangé avec 0,246 volume d'une préparation aqueuse contenant 14,1% en masse d'une dispersion de copolymère de vinyle acrylique commercialisée par VINAVIL® sous la référence M310 EMULSION, et 1,2% en masse de TRITON X100.

La composition homogène obtenue a la consistance d'une pâte qu'on étale en une épaisseur de 1 cm dans un moule perforé au fond duquel a été placée une feuille de papier imprégnée de la préparation aqueuse. Une seconde feuille imprégnée est utilisée pour recouvrir la pâte. On extrait ensuite 0,05 volume de la phase liquide par compression de la pâte au sein de ce moule. On laisse sécher cette structure en sandwich pendant 24 heures à une température de 40°C et à une humidité relative de 10 %. On obtient ainsi un produit en forme de plaque autoporteuse facile à manipuler et à découper.

La conductivité de la couche contenant l'aérogel est de seulement 17,7 mW/(m.K) à 23 °C, c'est-à-dire à peine supérieure à celle du mélange de poudre utilisé pour sa préparation. Cette valeur est spectaculairement basse en comparaison des conductivités thermiques rapportées dans l'état de la technique pour des produits isolants à base de particules d'aérogel liantées sans phyllosilicates, comprises entre 25 et 350 mW/(m.K).

**Exemple 7**

Deux aérogels de silice hydrophobe, commercialisés sous la dénomination ISOGEL® par la société PCAS/ENERSENS, de granulométries établies par tamisage comprises entre 0 et 100 $\mu$m pour le premier et comprises entre 1000 et 1250 $\mu$m pour le second sont mélangés.

Un mélange de poudres d'aérogel contenant

- 40 % en masse de particules ayant une taille inférieure à 100 μm, et
- 60 % en masse de particules ayant une taille comprise entre 1000 et 1250 μm a une masse volumique apparente ($\rho_{app}$) de 0,134 g/cm$^3$, une compacité de 0,80 et une conductivité thermique de 15,2 mW/(m.K) à 23 °C.

Dans un premier temps, un volume de ce mélange est mélangé avec 0,44 % massique de fibres de polyéthylène (PET) de longueur 6 mm. Ce nouveau mélange est ensuite mélangé avec 0,21 volume d'une préparation aqueuse contenant 12 % en masse d'une dispersion de latex de la société BASF Model Dispersion diluée à 48 % dans l'eau contenant 5,7 % en masse d'une dispersion aqueuse à 30 % massique de tensioactif non-ionique commercialisée sous la référence FlipFlop® par la société PCAS.

Le latex Model Dispersion proposée par la société BASF est un styrène butyl acrylate (parfois nommé polystyrène - poly(butyl acrylate)) avec une taille de particule de 210 nm (diamètre). Il se compose de 44% de styrène, 53% de Butyl-acrylate et 3% d'acide méthacrylique. L'acide méthacrylique ou PMAA est le système de stabilisation stérique. Il est greffé à la surface des particules de latex.

La composition homogène obtenue a la consistance d'une pâte qu'on étale en une épaisseur de 4 cm dans un moule perforé au fond duquel a été placée une feuille de papier imprégnée de la préparation aqueuse. Une seconde feuille imprégnée est utilisée pour recouvrir la pâte. On extrait ensuite 0,05 volume de la phase liquide par compression de la pâte au sein de ce moule. On laisse sécher cette structure en sandwich pendant 24 heures à une température de 40°C et à une humidité relative de 10 %. On obtient ainsi un produit en forme de plaque autoporteuse facile à manipuler et à découper.

La conductivité de la couche contenant l'aérogel est de seulement 15,9 mW/(m.K) à 23 °C, c'est-à-dire à peine supérieure à celle du mélange de poudre utilisé pour sa préparation. Cette valeur est spectaculairement basse en comparaison des conductivités thermiques rapportées dans l'état de la technique pour des produits isolants à base de particules d'aérogel liantées sans phyllosilicates, comprises entre 25 et 350 mW/(m.K).

**Exemple 8**

Deux aérogels de silice hydrophobe, commercialisés sous la dénomination ISOGEL® par la société PCAS/ENERSENS, de granulométries établies par tamisage comprises entre 0 et 100 μm pour le premier et comprises entre 1000 et 1250 μm pour le second sont mélangés.

Un mélange de poudres d'aérogel contenant

- 40 % en masse de particules ayant une taille inférieure à 100 μm, et
- 60 % en masse de particules ayant une taille comprise entre 1000 et 1250 μm a une masse volumique apparente ($\rho_{app}$) de 0,133 g/cm$^3$, une compacité de 0,79 et une conductivité thermique de 16 mW/(m.K) à 23 °C.

Un volume de ce mélange est ensuite mélangé avec 0,285 volume d'une solution aqueuse contenant 1,2% en masse de tensioactif non ionique Triton X100 commercialisé par DOW® et 2,2 % en masse de colle cellulosique commercialisée sous la marque QUELID Vinyl+®.

La composition homogène obtenue a la consistance d'une pâte qu'on étale en une épaisseur de 1 cm dans un moule perforé au fond duquel a été placée une feuille de papier imprégnée de la préparation aqueuse. Une seconde feuille imprégnée est utilisée pour recouvrir la pâte. On extrait ensuite 0,05 volume de la phase liquide par compression de la pâte au sein de ce moule. On laisse sécher cette structure en sandwich pendant 24 heures à une température de 40°C et à une humidité relative de 10 %. On obtient ainsi un produit en forme de plaque autoporteuse assez facile à manipuler et à découper.

La conductivité de la couche contenant l'aérogel est de seulement 17 mW/(m.K) à 23 °C, c'est-à-dire à peine supérieure à celle du mélange de poudre utilisé pour sa préparation. Cette valeur est spectaculairement basse en comparaison des conductivités thermiques rapportées dans l'état de la technique pour des produits isolants à base de particules d'aérogel liantées sans phyllosilicates, comprises entre 25 et 350 mW/(m.K).

**Exemple 9- non-conforme à l'invention**

Deux aérogels de silice hydrophobe, commercialisés sous la dénomination ISOGEL® par la société PCAS/ENERSENS, de granulométries établies par tamisage comprises entre 0 et 100 μm pour le premier et comprises entre 1000 et 1250 μm pour le second sont mélangés. Un mélange de poudres d'aérogel contenant

- 40 % en masse de particules ayant une taille inférieure à 100 μm, et

- 60 % en masse de particules ayant une taille comprise entre 1000 et 1250 $\mu$m est réalisé.

Ce mélange a une masse volumique apparente de 0,133 g/cm$^3$, une compacité de 0,79 et une conductivité thermique de 16 mW/(m.K) à 23 °C.
Un volume de ce mélange est ensuite mélangé avec 0,27 volume d'une préparation aqueuse contenant 2,2 % en masse de colle cellulosique commercialisée sous la marque QUELID Vinyl+® de Bostik.
La composition obtenue est peu homogène, elle a la consistance d'une pâte qu'on étale en une épaisseur de 1 cm dans un moule perforé au fond duquel a été placée une feuille de papier imprégnée de la colle à papier peint. Une seconde feuille imprégnée est utilisée pour recouvrir la pâte. On laisse sécher cette structure en sandwich pendant 6 jours à une température de 25 °C et à une humidité relative de 50 %. On obtient ainsi un produit en forme de plaque qui casse facilement à la manipulation.

**Evaluation des Propriétés mécaniques des matériaux conformes à l'invention - Etude de l'influence du liant :**

Les propriétés mécaniques de matériaux conformes à l'invention ont été évaluées et comparées à celles de matériaux non-conformes à l'invention. Plus précisément, des essais de flexion dite « quatre points » ont été conduits afin de déterminer la résistance maximale du matériau et la déformation du matériau à cette résistance maximale.
L'essai en flexion est adapté de la norme AFNOR XP-P 18409 pour les bétons fibrés.
Des éprouvettes prismatiques de dimension 20x20x80 mm sont sollicitées avec une distance entre appuis inférieurs de A=60 mm et une distance entre appuis supérieurs de B=20 mm.
L'essai est réalisé sur une machine 'Bose electroforce EF3200' et piloté en boucle ouverte avec une cellule de 22 N, et un capteur de déplacement LVDT.
Une courbe charge/flèche est alors obtenue. Cette courbe présente un maximum, unique qui est ensuite utilisé pour calculer la contrainte ou résistance maximale ainsi que la déformation à ce pic.
Le tableau ci-dessous reprend les propriétés mécaniques ainsi déterminées. Les résultats présentés sont la moyenne de 6 essais.

| Plaque autoporteuse | Tensioactif | Polymère organique | Conductivité (mW/(m.K) | Résistance maximale (kPa) | Déformation à Rm (%) |
|---|---|---|---|---|---|
| Selon l'Exemple 1 | Flip Flop ® | Colle cellulosique QUELID Vinyl+® | 17 | 50 | 3,2 |
| Selon l'Exemple 7 | Flip Flop ® | Latex Model Dispersion | 15,9 | 128 | 6,0 |
| Selon l'Exemple 8 | Triton ® | Colle cellulosique QUELID Vinyl+® | 17 | 12 | 2,3 |
| Selon l'Exemple 9 | sans | Colle cellulosique QUELID Vinyl+® | 17 | 2 | 1 |

Les résultats ci-dessus montrent que les matériaux conformes à l'invention tels que les matériaux selon les exemples 1,7 et 8 constituent de très bons isolants et présentent en outre de remarquables propriétés mécaniques.

**Revendications**

**1.** Matériau solide d'isolation thermique comprenant moins de 0,1% en poids de phyllosilicates, comprenant

    (a) de 70 à 98 % en volume, de préférence de 75 à 96 % en volume, en particulier de 80 à 95 % en volume, de particules d'aérogel de silice hydrophobe ayant une masse volumique intrinsèque comprise entre 110 et 210 kg/m$^3$,
    (b) de 0,3 à 12 % en volume, de préférence 0,5 à 9 % en volume, d'un liant organique formé par :

        - au moins un polymère organique (b1) et au moins un agent tensioactif (b2), ou
        - par au moins un polymère organique amphiphile obtenu à partir de monomères comportant un groupement ionique et une chaîne grasse (b3),

ces fractions volumiques étant déterminées par analyse d'image sur des coupes minces du matériau solide et étant rapportées au volume total du matériau,

les particules d'aérogel ayant une distribution granulométrique présentant au moins deux maxima, avec un premier maximum correspondant à un diamètre équivalent (d) inférieur à 200 $\mu$m, de préférence compris entre 25 $\mu$m et 150 $\mu$m, et un deuxième maximum correspondant à un diamètre équivalent (D) compris entre 400 $\mu$m et 10 mm, de préférence entre 500 $\mu$m et 5 mm.

**2.** Matériau selon la revendication 1, **caractérisé par le fait que** le rapport D/d est compris entre 10 et 200, de préférence entre 20 et 100.

**3.** Matériau selon la revendication 1 ou 2, **caractérisé par le fait que** la fraction volumique de particules d'aérogel ayant un diamètre équivalent inférieur à 200 $\mu$m, rapportée à la fraction totale d'aérogel, est comprise entre 7,5 et 60 %, de préférence entre 20 et 55 %.

**4.** Matériau selon la revendication 1 ou 2, **caractérisé par le fait que** la fraction volumique de particules d'aérogel ayant un diamètre équivalent inférieur à 150 $\mu$m, rapportée à la fraction totale d'aérogel, est comprise entre 7,5 et 60 %, de préférence entre 20 et 55 %.

**5.** Matériau selon la revendication 1 ou 2, **caractérisé par le fait que** la fraction volumique de particules d'aérogel ayant un diamètre équivalent inférieur à 80 $\mu$m, rapportée à la fraction totale d'aérogel, est comprise entre 7,5 et 60 %, de préférence entre 20 et 55 %.

**6.** Matériau selon l'une quelconque des revendications précédentes, **caractérisé par le fait que** le polymère organique (b1) ou le polymère organique amphiphile (b3) est un polymère organique thermoplastique, de préférence hydrosoluble ou hydrodispersible.

**7.** Matériau selon l'une quelconque des revendications précédentes, **caractérisé par le fait que** le polymère organique (b1) ou le polymère amphiphile (b3) est un polymère thixotrope.

**8.** Matériau selon l'une des revendications 1 à 5, **caractérisé par le fait que** le polymère organique (b1) est une résine organique thermodurcie.

**9.** Matériau selon l'une quelconque des revendications précédentes, **caractérisé par le fait qu'**il contient en outre au plus 2 % en volume, de préférence de 0,2 à 1 % en volume, de particules opacifiantes au rayonnement infrarouge.

**10.** Matériau selon l'une quelconque des revendications précédentes, **caractérisé par le fait qu'**il présente une masse volumique, à l'état sec, comprise entre 100 et 215 g/cm$^3$.

**11.** Procédé de préparation d'un matériau solide selon l'une quelconque des revendications précédentes, comprenant

- le mélange ou la mise en contact des particules d'aérogel de silice hydrophobe (a) ayant une distribution granulométrique présentant au moins deux maxima, avec un premier maximum correspondant à un diamètre équivalent (d) inférieur à 200 $\mu$m, de préférence compris entre 25 $\mu$m et 150 $\mu$m, et un deuxième maximum correspondant à un diamètre équivalent (D) compris entre 400 $\mu$m et 10 mm, de préférence entre 500 $\mu$m et 5 mm, de l'agent tensioactif (b2) et du polymère organique (b1), ou du polymère amphiphile (b3), avec 0,75 à 4 parties en poids d'eau, de préférence avec 1,5 à 3 parties en poids d'eau,
- la mise en forme de la composition aqueuse ainsi obtenue, et
- le séchage du matériau mis en forme.

**12.** Procédé selon la revendication 11, **caractérisé par le fait que** l'aérogel de silice hydrophobe (a), avant mélange ou mise en contact avec les autres ingrédients, a une compacité supérieure à 0,75, en particulier supérieure à 0,77 et idéalement supérieure à 0,78.

**13.** Procédé selon la revendication 11 ou 12, **caractérisé par le fait que** le rapport en poids du polymère organique (b1) à l'agent tensioactif (b2) est compris entre 30/70 et 80/20, de préférence entre 40/60 et 70/30.

**14.** Procédé selon l'une quelconque des revendications 11 à 13, **caractérisé par le fait que** le polymère organique (b1) et l'agent tensioactif (b2) ou le polymère organique amphiphile (b3) sont d'abord dissous ou dispersés dans l'eau, la solution ou dispersion étant ensuite mélangée ou mise en contact avec les particules d'aérogel.

15. Procédé selon l'une quelconque des revendications 11 à 14, **caractérisé par le fait que** l'aérogel de silice hydrophobe (a) est obtenu par mélange d'au moins deux fractions d'aérogel, une première fraction présentant un diamètre équivalent moyen ($d_m$) inférieur à 200 $\mu$m, de préférence compris entre 25 $\mu$m et 150 $\mu$m, et une deuxième fraction présentant un diamètre équivalent moyen ($D_m$) compris entre 400 $\mu$m et 10 mm, de préférence entre 500 $\mu$m et 5 mm.

16. Produit d'isolation thermique, **caractérisé par le fait qu'**il comporte au moins une couche d'un matériau selon l'une quelconque des revendications 1 à 10.


**Patentansprüche**

1. Festes, wärmeisolierendes Material, umfassend weniger als 0,1 Gew.% Phyllosilikate, umfassend

   (a) von 70 bis 98 Vol%, vorzugsweise von 75 bis 96 Vol%, insbesondere von 80 bis 95 Vol%, Aerogelpartikel von hydrophobem Siliciumdioxid, die eine intrinsische Dichte zwischen 110 und 210 kg/m$^3$ aufweisen,
   (b) von 0,3 bis 12 Vol%, vorzugsweise 0,5 bis 9 Vol%, eines organischen Bindemittels, das gebildet ist durch:

   - mindestens ein organisches Polymer (b1) und mindestens einen oberflächenaktiven Stoff (b2) oder
   - mindestens ein amphiphiles organisches Polymer, das aus Monomeren erhalten ist, die eine ionische Gruppe und eine Fettkette (b3) umfassen,

   wobei diese Volumenanteile durch Bildanalyse auf Dünnschnitten des festen Materials bestimmt werden und auf das Gesamtvolumen des Materials bezogen sind,
   wobei die Aerogelpartikel eine Partikelgrößenverteilung besitzen, die mindestens zwei Maxima aufweist, mit einem ersten Maximum, das einem Äquivalentdurchmesser (d) von weniger als 200 $\mu$m, vorzugsweise zwischen 25 $\mu$m und 150 $\mu$m, entspricht, und einem zweiten Maximum, das einem Äquivalentdurchmesser (D) zwischen 400 $\mu$m und 10 mm, vorzugsweise zwischen 500 $\mu$m und 5 mm, entspricht.

2. Material nach Anspruch 1, **dadurch gekennzeichnet, dass** das Verhältnis D/d zwischen 10 und 200, vorzugsweise zwischen 20 und 100, beträgt.

3. Material nach Anspruch 1 oder 2, **dadurch gekennzeichnet, dass** der Volumenanteil an Aerogelpartikeln, die einen Äquivalentdurchmesser von weniger als 200 $\mu$m aufweisen, bezogen auf den Gesamtanteil an Aerogel zwischen 7,5 und 60 %, vorzugsweise zwischen 20 und 55 %, beträgt.

4. Material nach Anspruch 1 oder 2, **dadurch gekennzeichnet, dass** der Volumenanteil an Aerogelpartikeln, die einen Äquivalentdurchmesser von weniger als 150 $\mu$m aufweisen, bezogen auf den Gesamtanteil an Aerogel zwischen 7,5 und 60 %, vorzugsweise zwischen 20 und 55 %, beträgt.

5. Material nach Anspruch 1 oder 2, **dadurch gekennzeichnet, dass** der Volumenanteil an Aerogelpartikeln, die einen Äquivalentdurchmesser von weniger als 80 $\mu$m aufweisen, bezogen auf den Gesamtanteil an Aerogel zwischen 7,5 und 60 %, vorzugsweise zwischen 20 und 55 %, beträgt.

6. Material nach einem der vorhergehenden Ansprüche, **dadurch gekennzeichnet, dass** das organische Polymer (b1) oder das amphiphile organische Polymer (b3) ein thermoplastisches organisches Polymer ist, das vorzugsweise wasserlöslich oder wasserdispergierbar ist.

7. Material nach einem der vorhergehenden Ansprüche, **dadurch gekennzeichnet, dass** das organische Polymer (b1) oder das amphiphile Polymer (b3) ein thixotropes Polymer ist.

8. Material nach einem der Ansprüche 1 bis 5, **dadurch gekennzeichnet, dass** das organische Polymer (b1) ein wärmegehärtetes organisches Harz ist.

9. Material nach einem der vorhergehenden Ansprüche, **dadurch gekennzeichnet, dass** es ferner höchstens 2 Vol%, vorzugsweise von 0,2 bis 1 Vol%, bei Infrarotstrahlung opazifierende Partikel enthält.

**10.** Material nach einem der vorhergehenden Ansprüche, **dadurch gekennzeichnet, dass** es eine Dichte im trockenen Zustand aufweist, die zwischen 100 und 215 g/cm$^3$ liegt.

**11.** Verfahren zur Herstellung eines festen Materials nach einem der vorhergehenden Ansprüche, umfassend

- das Vermischen oder Inkontaktbringen der Aerogelpartikel von hydrophobem Siliciumdioxid (a), die eine Partikelgrößenverteilung besitzen, die mindestens zwei Maxima aufweist, mit einem ersten Maximum, das einem Äquivalentdurchmesser (d) von weniger als 200 $\mu$m, vorzugsweise zwischen 25 $\mu$m und 150 $\mu$m, entspricht, und einem zweiten Maximum, das einem Äquivalentdurchmesser (D) zwischen 400 $\mu$m und 10 mm, vorzugsweise zwischen 500 $\mu$m und 5 mm, entspricht, des oberflächenaktiven Stoffes (b2) und des organischen Polymers (b1) oder des amphiphilen Polymers (b3) mit 0,75 bis 4 Gewichtsteilen Wasser, vorzugsweise mit 1,5 bis 3 Gewichtsteilen Wasser,
- das Formen der auf diese Weise erhaltenen wässrigen Zusammensetzung und
- das Trocknen des geformten Materials.

**12.** Verfahren nach Anspruch 11, **dadurch gekennzeichnet, dass** das Aerogel von hydrophobem Siliciumdioxid (a) vor dem Vermischen oder Inkontaktbringen mit den anderen Bestandteilen eine Kompaktheit von über 0,75, insbesondere von über 0,77 und idealerweise von über 0,78, aufweist.

**13.** Verfahren nach Anspruch 11 oder 12, **dadurch gekennzeichnet, dass** das Gewichtsverhältnis von dem organischen Polymer (b1) zu dem oberflächenaktiven Stoff (b2) zwischen 30/70 und 80/20, vorzugsweise zwischen 40/60 und 70/30, beträgt.

**14.** Verfahren nach einem der Ansprüche 11 bis 13, **dadurch gekennzeichnet, dass** das organische Polymer (b1) und der oberflächenaktive Stoff (b2) oder das amphiphile organische Polymer (b3) zunächst in Wasser gelöst oder dispergiert werden, wobei die Lösung oder Dispersion dann mit den Aerogelpartikeln vermischt oder in Kontakt gebracht wird.

**15.** Verfahren nach einem der Ansprüche 11 bis 14, **dadurch gekennzeichnet, dass** das Aerogel von hydrophobem Siliciumdioxid (a) durch Vermischen von mindestens zwei Fraktionen Aerogel, einer ersten Fraktion, die einen durchschnittlichen Äquivalentdurchmesser (d$_m$) von weniger als 200 $\mu$m, vorzugsweise zwischen 25 $\mu$m und 150 $\mu$m, aufweist, und einer zweiten Fraktion, die einen durchschnittlichen Äquivalentdurchmesser (D$_m$) zwischen 400 $\mu$m und 10 mm, vorzugsweise zwischen 500 $\mu$m und 5 mm, aufweist, erhalten wird.

**16.** Thermisch isolierendes Produkt, **dadurch gekennzeichnet, dass** es mindestens eine Schicht eines Materials nach einem der Ansprüche 1 bis 10 aufweist.

**Claims**

**1.** A solid thermal insulation material comprising less than 0.1% in weight of phyllosilicates, comprising:

(a) 70% to 98% by volume, preferably 75% to 96% by volume, in particular 80% to 95% by volume, of hydrophobic silica aerogel particles having an intrinsic volume density mass comprised between 110 and 210 kg/m$^3$,
(b) 0.3% to 12% by volume, preferably 0.5% to 9% by volume, of an organic binder formed by :

- at least one organic polymer (b1) and at least one surface-active agent (b2), or
- by at least one amphiphilic organic polymer obtained from monomers comprising an ionic group and a fatty chain (b3),

these volume fractions being determined by image analysis on thin sections of the solid material and being with respect to the total volume of the material,
the aerogel particles having a particle size distribution exhibiting at least two maxima, with a first maximum corresponding to an equivalent diameter (d) of less than 200 $\mu$m, preferably comprised between 25 $\mu$m and 150 $\mu$m, and a second maximum corresponding to an equivalent diameter (D) comprised between 400 $\mu$m and 10 mm, preferably between 500 $\mu$m and 5 mm.

**2.** The material as claimed in claim 1, **characterized in that** the ratio D/d is comprised between 10 and 200, preferably between 20 and 100.

3. The material as claimed in claim 1 or 2, **characterized in that** the volume fraction of aerogel particles having an equivalent diameter of less than 200 $\mu$m, with respect to the total aerogel fraction, is comprised between 7.5% and 60%, preferably between 20% and 55%.

4. The material as claimed in claim 1 or 2, **characterized in that** the volume fraction of aerogel particles having an equivalent diameter of less than 150 $\mu$m, with respect to the total aerogel fraction, is comprised between 7.5% and 60%, preferably between 20% and 55%.

5. The material as claimed in claim 1 or 2, **characterized in that** the volume fraction of aerogel particles having an equivalent diameter of less than 80 $\mu$m, with respect to the total aerogel fraction, is comprised between 7.5% and 60%, preferably between 20% and 55%.

6. The material as claimed in any one of the preceding claims, **characterized in that** the organic polymer (b1) or the amphiphilic organic polymer (b3) is a thermoplastic organic polymer, preferably a water-soluble or water-dispersible thermoplastic organic polymer.

7. The material as claimed in any one of the preceding claims, **characterized in that** the organic polymer (b1) or the amphiphilic polymer (b3) is a thixotropic polymer.

8. The material as claimed in one of claims 1 to 5, **characterized in that** the organic polymer (b1) is a thermoset organic resin.

9. The material as claimed in any one of the preceding claims, **characterized in that** it additionally comprises at most 2% by volume, preferably 0.2% to 1% by volume, of particles which are opacifying under infrared radiation.

10. The material as claimed in any one of the preceding claims, **characterized in that** it exhibits a volume density mass, in the dry state, comprised between 100 and 215 g/cm$^3$.

11. A process for the preparation of a solid material as claimed in any one of the preceding claims, comprising:

   - mixing the hydrophobic silica aerogel particles (a) having a particle size distribution exhibiting at least two maxima, with a first maximum corresponding to an equivalent diameter (d) of less than 200 $\mu$m, preferably comprised between 25 $\mu$m and 150 $\mu$m, and a second maximum corresponding to an equivalent diameter (D) comprised between 400 $\mu$m and 10 mm, preferably between 500 $\mu$m and 5 mm, the surface-active agent (b2) and the organic polymer (b1) or the amphiphilic polymer (b3) with, or bringing them into contact with, 0.75 to 4 parts by weight of water, preferably with 1.5 to 3 parts by weight of water,
   - shaping the aqueous composition thus obtained, and
   - drying the shaped material.

12. The process as claimed in claim 11, **characterized in that** the hydrophobic silica aerogel (a), before mixing or bringing into contact with the other ingredients, has a compactness of greater than 0.75, in particular of greater than 0.77 and ideally of greater than 0.78.

13. The process as claimed in claim 11 or 12, **characterized in that** the ratio by weight of the organic polymer (b1) to the surface-active agent (b2) is between 30/70 and 80/20, preferably between 40/60 and 70/30.

14. The process as claimed in any one of claims 11 to 13, **characterized in that** the organic polymer (b1) and the surface-active agent (b2) or the amphiphilic organic polymer (b3) are first dissolved or dispersed in the water, the solution or dispersion subsequently being mixed or brought into contact with the aerogel particles.

15. The process as claimed in any one of claims 11 to 14, **characterized in that** the hydrophobic silica aerogel (a) is obtained by mixing at least two aerogel fractions, a first fraction exhibiting a mean equivalent diameter ($d_m$) of less than 200 $\mu$m, preferably comprised between 25 $\mu$m and 150 $\mu$m, and a second fraction exhibiting a mean equivalent diameter ($D_m$) comprised between 400 $\mu$m and 10 mm, preferably between 500 $\mu$m and 5 mm.

16. A thermal insulation product, **characterized in that** it comprises at least one layer of a material as claimed in any one of claims 1 to 10.

**EP 2 714 613 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0340707 A
- EP 0787112 A
- WO 03064025 A
- DE 4441567
- EP 0954438 A
- DE 19533564 A1
- US 5656195 A

**Littérature non-brevet citée dans la description**

- Vacuum Insulation Panels - Study on VIP-components and Panels for Service Life Prediction of VIP in Building Applications (Subtack A). *IEA/ECBS Annex 39,* Septembre 2005